(19) Europäisches Patentamt
European Patent Office
Office européen des brevets

(11) **EP 2 772 775 A1**

(12) **EUROPEAN PATENT APPLICATION**
published in accordance with Art. 153(4) EPC

(43) Date of publication:
**03.09.2014 Bulletin 2014/36**

(51) Int Cl.:
*G01V 1/50* (2006.01)

(21) Application number: **11805066.5**

(22) Date of filing: **24.10.2011**

(86) International application number:
**PCT/ES2011/070734**

(87) International publication number:
**WO 2013/060903 (02.05.2013 Gazette 2013/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Repsol, S.A.**
**28045 Madrid (ES)**

(72) Inventors:
• **BEDA, Giulio**
  **E-28045 Madrid (ES)**

• **TIWARY, Devendra Nath**
  **E-28045 Madrid (ES)**

(74) Representative: **ZBM Patents - Zea, Barlocci & Markvardsen**
**Plaza Catalunya, 1**
**08002 Barcelona (ES)**

(54) **METHOD FOR DETERMINING IN REAL TIME THE POROSITY AND WATER SATURATION OF AN UNDERGROUND FORMATION USING GAS LEVEL AND DRILLING DATA**

(57)    A method and a computer program product for determining the porosity (PHI) and water saturation (Sw) of an underground formation while drilling a borehole, using gas and mud logging data obtained while drilling.

EP 2 772 775 A1

**Description**

FIELD OF THE INVENTION

The present invention refers to the field of determining the fluid content of underground earth formations. More specifically, the invention is related to a method and a computer program product for determining the porosity (PHI) and water saturation (Sw) of an underground formation while drilling a borehole using gas and mud logging data.

BACKGROUND ART

Interpretation of gas and mud logging data in a quantitative way is still far from simple. In most of the cases the conclusions reached are generally viewed sceptically due to the uncertainties inherent to the acquisition of data. The reputation of being an unreliable source of data with inconsistent results is quite well known. In recent years, many studies have been presented by Oil Companies showing the multiple uses of gas data in supporting the E-log analysis, geochemistry studies and reservoir behavior proving the added value of the mud logging data for early formation evaluation and fluid characterization.

The fractional volume of pore occupied by water (herein referred as "water saturation" and represented by Sw), is a key data in the early formation evaluation and fluid characterization. It is assumed that the non-water occupied pore space contains oil and/or gas.

There are methods known in the art for determining fractional volume of pore occupied by water and oil and/or gas, which are generally based on measurements of the electrical resistivity of the rock formations.

Most techniques for determining water saturation are based on measurements of rock formation resistivity. A relationship between the resistivity (Rt) of the porous rock to the connate water resistivity (Rw), water saturation (Sw) and fractional volume of rock occupied by pore space (porosity ($\varphi$, "PHI")) is determined by the Archie equation:

$$S_w^n = \frac{R_0}{R_t} = \frac{1}{R_t}\frac{aR_w}{\varphi^m}$$

wherein a, n and m are empirically determined factors which relate the porosity to the resistivity of the porous rock formation when it is completely water-saturated.

After drilling the borehole, gamma ray, electrical resistivity and neutron testing tools alongwith one or more testing tools are lowered in the well and their responses against various lithology are recorded. These tests are often referred to collectively as E-logs. E-logs themselves can be indicative of the lithology porosity and water saturation. Thus, E-logs are used, after drilling, to determine whether a formation is porous and has hydrocarbon.

It is important for economic reasons to determine, in real time, i.e. while drilling, what fractional volume of the pore spaces of penetrated formations are occupied by oil and/or gas prior to running the wireline logging tool or planning for the future course of action.

Generally speaking, mud logging is a mobile laboratory provided, by the mud logging company, located near the drilling rig to follow, control and record all the drilling and geological information. Mud logging includes observation and microscopic examination of drill cuttings (formation rock chips), and evaluation of gas hydrocarbon and its constituents, basic chemical and mechanical parameters of drilling fluid or drilling mud (such as chlorides and temperature), as well as compiling other information about the drilling parameters. Then data is plotted on a graphic log called a mud log. Other real-time drilling parameters that may be compiled include, but are not limited to; Rate of Penetration (ROP) of the bit (sometimes called the drill rate), Pump Rate (quantity of fluid being pumped), Pump Pressure, Weight on Bit (WOB), Drill String Weight, Rotary Speed, Rotary Torque, Revolutions Per Minute (RPM), Strokes Per Minute (SPM), Mud Volumes, Mud Weight and Mud Viscosity.

While drilling, gas liberated from a mud returning from the wellbore in a gas trap, can be analysed using real-time sensors which measures at specified sample rate the quantity of hydrocarbons (namely methane (C1), ethane (C2), etc., in ppm (parts per million). These measurements can be used as an indication of presence of hydrocarbon in formation at various depth.

The acquisition of gas and mud logging data while drilling is a widespread in the petroleum industry. At present, these data are mainly utilized for safety and geological surveillance. While real time drilling data are used in a "quantitative" manner, mainly for well control, the real time gas data, due to its variability, are generally used only in a qualitative way, and the analyses performed are mainly restricted to the use of Pixler, Wetness, Balance, Character or equivalent ratios to try to determine the nature of the fluid.

At present time, with the introduction of new technologies (Fast Chromatograph, Gas Cromatography-Mass Spectrometry, last generation of gas device..) and methodologies (GWD, QC analysis, calibrations protocol..), it has become a common practice in the oil industry to use the gas data to identify the presence of hydrocarbons and to characterize the fluids in real time. The final evaluation is always postponed at the end of the well when wire line logs are recorded.

Accordingly,there is a need for a method in real time while drilling for ascertaining the volume of hydrocarbon in formation and reducing the uncertaininity inherent to petrophysical interpretation of E-logs

## SUMMARY OF THE INVENTION

The invention disclosed herein relates to a method for using gas and mud logging data obtained while drilling in a quantitative way to determine the saturation of water in the formation and its porosity. Thus, a method is provided for determining water saturation (Sw_Gas) and porosity ($\varphi$. "PHI" is termed as porosity in general, and when it is derived by using the methodology described in the present invention in case of Elogs, from a reference well, are available is termed as PHI_LOG; when no E-logs from a reference well are available is termed as PHI_ML) of an underground formation while drilling a borehole from gas and mud logging data which are obtained while drilling.

Therefore, a first aspect of the present invention relates to a method of determining the porosity (PHI_ML and/or PHI_LOG) and water saturation (Sw_Gas) of an underground formation while drilling a borehole, which comprises:

I. calculating the Perforability Index (PI) as the inverse of the Rate of Penetration (ROP) normalized which is solved as the mathematical correction of the mud logging parameters obtained while drilling that affect the ROP;
II. normalizing the methane (C1) data as a mathematical correction for variation in drilling parameters
III. plotting the C1 normalized data versus Perforability Index (PI) in a double logarithmic plot (log log cross plot), hereafter called BT plot; and the PI versus depth in linear scale;
IV. using the plots above to determine

i. the Gw baseline representing the 100% Sw;
ii. the $PI_{0line}$ representing the line in shale or zone with 0% porosity;

V. determining the Sw_Gas from the determinied Gw baseline obtained in step IV and determining the porosity using E-log data of a reference well (PHI_LOG) or from the determined $PI_{0line}$ obtained in step IV when no reference well is available (PHI_ML).

Another aspect of the invention relates to a computer program product comprising program instructions for causing a computer to perform the method of determining the porosity and water saturation while drilling as defined above. Said computer program may be embodied on storing means (for example, on a record medium, on a computer memory or on a read-only memory) or carried on a carrier signal to be, for example, downloaded from a computer or sent by an email (for example, on an electrical or optical carrier signal).

Another aspect of the invention relates to a system of determining the porosity (PHI) and water saturation (Sw) of an underground formation while drilling a borehole, the system characterized in that comprises computing means for calculating the Perforability Index (PI) as the inverse of the Rate of Penetration (ROP) normalized which is solved as the mathematical correction of the mud logging parameters obtained while drilling that affect the ROP, using the mud logging data Rate of Penetration (ROP), Revolution per Minute (RPM), and Weight on Bit (WOB) obtained while drilling; computing means for normalizing the methane (C1) data as a mathematical correction for variation in drilling parameters; computing means for plotting the C1 normalized data versus Perforability Index in a double logarithmic plot (log log cross plot); and the PI versus depth in linear scale; computing means for using the plots above to determine the Gw baseline representing the 100% Sw and the PI baseline in shale or zone with 0% porosity; and computing means for determining the porosity and water saturation using the Gw baseline or the Perforability Index ($PI_{0line}$) baseline obtained above.

Alternatively, this aspect of the invention can be formulated as a system of determining the porosity (PHI) and water saturation (Sw) of an underground formation while drilling a borehole, the system comprising a memory and a processor, embodying instructions stored in the memory and executable by the processor, the instructions comprising functionality to:

I. calculating the Perforability Index (PI) as the inverse of the normalization of the Rate of Penetration (ROP) which is solved as the mathematical correction of the mud logging parameters obtained while drilling that affect the ROP;
II. normalizing the methane (C1) data as a mathematical correction for variation in drilling parameters
III. plotting the C1 normalized data versus Perforability Index (PI) in a double logarithmic plot (log log cross plot);

and the PI versus depth in a linear scale;
IV. using the plots above to determine

    i. the Gw baseline representing the 100% Sw;
    ii. the $PI_{0line}$ representing the line in shale or zone with 0% porosity;

V. determining the Sw_Gas from the determinied Gw baseline obtained in step IV and determining the porosity using E-log data of a reference well (PHI_LOG) or from the determined $PI_{0line}$ obtained in step IV when no reference well is available (PHI_ML).

It is important to highlight that the described system can be a part (for example, hardware in the form of a PCI card) of a computer system (for example a personal computer). On the other hand, the system can be an external hardware connected to the computer system by appropiate means.

BRIEF DESCRIPTION OF THE DRAWINGS

Figure 1: C1 normalised versus Depth. This plot shows the evolution of methane with depth.

Figure 2: C1 normalised versus resistivity.

Figure 3: Perforability Index (PI) versus Depth.

Figure 4: B&T plot: PI versus C1 normalised. Consists of a double logarithmic plot (log log cross plot) of a C1 normalised (in ppm) on the Y axis versus a Perforability Index on the X axis.

Figure 5: PHI_ML determination plot: PI versus Depth with $PI_{0line}$.

Figure 6: PHINDX by Density/Neutron versus Perforability Index (PI) with RMA line (Reduced Major Axis). RMA line is defined as line-fit gives an equation that is midway between linear and polynomial regression method. RMA provides a plausible line-fit when standard regression methods may not.

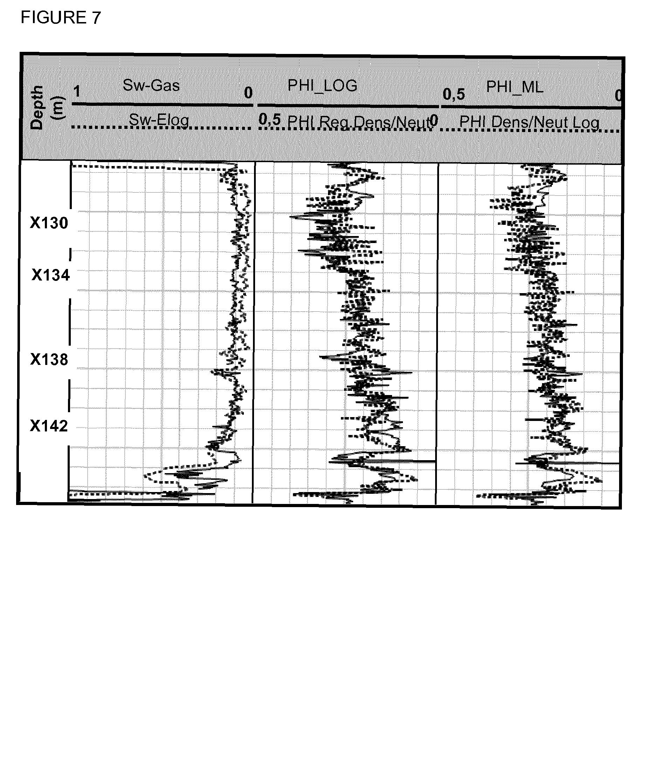

Figure 7: Comparison of Sw and porosity derived by the method of the invention versus E-log derived Sw and PHI for the whole well.

DETAILED DESCRIPTION OF THE INVENTION

<u>Definitions</u>

The terms used in the present application relate to the field of petrophysical, and in particular to the interpretation of measurements made by well logging instruments, and are well-known to the person skilled in the art. However, some definitions have been included in order to avoid any misinterpretation.
Mud Logging (as per the acronym in English "Mud Logging", ML): is a mobile laboratory situated, by the mud logging company, near the drilling rig to follow, control and record all the drilling and geological information.
Rotary Speed (as per the acronym in English "Rotary Speed", RPM): is defined as the rate at which the bit is rotated during drilling operations and it is measured in revolutions per minute (rpm).
Weight on Bit (as per the acronym in English "Weight on Bit", WOB): is the amount of downward force (at bit) exerted on the drill bit and is normally measured in thousands of pounds or thousands of kilograms.
Rate of Penetration (as per the acronyn in English "Rate of Penetration", ROP): is the speed at which a drill bit breaks the rock under it to deepen the borehole. Also known as penetration rate or drill rate. It is normally measured in feet per minute or meters per hour, but sometimes it is expressed in minutes per foot.
Flow in (FLOW): is the amount of the mud pumped in the well. It is normally measured in gpm (gallon per minute) or liter per minute.
Bit Size (as per the acronym in English "Bit Size", BS): the hole diameter.
Drilling Exponent (Dex): is a method of normalizing the ROP for change in WOB, RPM and Hole Size.
Gas Normalised: is the mathematical treatment of the parameters affecting the gas shows (mainly FLOW, ROP, BS).

Methane (C1): It is the simplest alkane, and the principal component of natural gas.

Gas Show: is a gas reading that varies in magnitude or composition in front of possible hydrocarbon zone.

Gamma Ray (as per the acronym in English "Gamma Ray", GR): Gamma ray logging is a method of measuring naturally occurring of gamma radiation to characterize the rock or sediment in a borehole.

MWD (as per the acronym in English "Measurement While Drilling") stands for Measurement While Drilling in the oil industry. Is a system developed to perform drilling related measurements downhole and transmit information to the surface while drilling a well. MWD tools are conveyed downhole as part of bottom hole assembly (as per the acronym in English "Bottom Hole Assembly", BHA). The tools are either contained inside a drill collar (sonde type) or are built into the collars themselves.

Logging While Drilling (as per the acronym in English "Logging While Drilling", LWD): is a technique of conveying well logging tools into the well borehole downhole as part of the bottom hole assembly (BHA).

GWD (as per the acronym in English "Gas While Drilling") stands for Gas While Drilling in the Oil industry. It is a methodology to interpret the gas data in terms of fluid characterization.

Service Co.: are the companies providing a mud logging service while drilling the well.

WLFT (as per the acronym in English "Wire Line Formation Tester", WLFT) stands for Wire Line Formation tester, which measures formation pressure and it obtains fluid samples after drilling the well.

WL bottom hole sample: is a fluid sample obtained by WLFT.

DST (as per the acronym in English "Drill Steam Test", DST): stands for Drill Steam test. It is a temporary completion whereby the desired section of the open hole is isolated and relieved of the mud column pressure through the drill pipe.

WL (as per the acronym in English "Wire Line"): stands for Wire line. It is a practice of making a detailed record of the geologic formations penetrated by a borehole.

OWC (as per the acronym in English "Oil-Water Contact", OWC): stands for Oil Water Contact. It is the boundary between two fluids.

QC (as per the acronym in English "Quality Check", QC): Quality Check.

PHINDX or PHI (Density/Neutron): Porosity derived by Density/Neutron log recorded by wireline tool.

Rt: True resistivity of formation.

Reduced Major Axis (as per the acronym in English "Reduced Major Axis", RMA). RMA line is defined as line-fit gives an equation that is midway between linear and polynomial regression method. RMA provides a plausible line-fit when standard regression methods may not.

Porosity (PHI): It is the void space in the rock which contains fluids. It is measured in terms of voume of void space to the total voume of rock. In the described methodology it is expressed as per unit. Hence, if a rock has PHI value of 0.2 means it has 20% of free space to hold the fluid.

Water saturation (Sw) of the rock is the fractional volume of pore occupied by water. In the described methodology it is expessed as per unit. Hence, in case of a rock is having 0.3 Sw value then it means that 30% of its pore space (PHI) is occupied by the water and remaining 70% is occupied by the hydrocabon.

Unless it is expressly mentioned the contrary, all the logarithms are expressed in decimal base.

Methodology

A minimum data set of resistivity, porosity logs and GR are needed for a formation evaluation in wire line environment. Nevertheless, according to the method of the present invention which uses gas and mud logging data, these direct physical measurements have been replaced by drilling and gas data, particularly Methane (C1) and ROP (Rate Of Penetration).

Methane (C1) has been selected as a substitute for the resistivity curve, and a function of the normalized ROP as replacement for the porosity logs. The GR, necessary as lithology discriminator, is normally recorded while drilling. If no GR is available, the description of cuttings can be used as lithology indicator.

Generally speaking, high gas shows correspond the presence of hydrocarbons (high or higher resistivity respect to the formation water) and low gas shows are recorded mainly in presence of water bearing or a shaly zone, which are characterized by low resistivity.

The method of the present invention uses the inverse of the Rate of Penetration (ROP) normalized obtained while drilling, which we call Perforability Index (PI), as porosity indicator. In fact, variations in Rate of Penetration (ROP) are generally linked to porosity and lithology. Low ROP in particular are normally recorded in tight lithologies (low porosity), while high ROP is generally registered in presence of porous zones.

These two well known assumptions allows us to consider C1 and PI curves as possible candidates to replace the resistivity and porosity logs in the well known Archie equation (Archie, G.E. " Electrical resistivity Log as an Aid in Determining Some Reservoir Characteristic", AIME (1942) 146, 54-61) for solving Sw. The selection of C1, as a resistivity indicator is due to the fact that this alkane is always present while drilling, and it is the easiest gas component to be separated out from the mud.

Methane (C1) is normally recorded in:

a) reservoir,
b) non reservoir (tight interval),
c) hydrocarbon zones and
d) water bearing zones.

The data used for the estimation of Sw and porosity are:

Methane (C1), (ppm)
Rate Of Penetration (ROP) (m/min)
Rotary per Minute (RPM) (rpm)
Weight On Bit (WOB) (in 1000Kg)
Flow in (FLOW) (liter/min)
Bit size (BS) (m)

The calculation of the Sw, by gas, according to the method of the present invention can be carried out without "calibration or reference wells" and or existing interpretative models.

According to an embodiment of the first aspect of the invention, the Perforability Index (PI) is calculated from the equation 1 (Eq. 1):

$$PI = 1 \Big/ \left[ \frac{Log \dfrac{ROP}{RPM}}{Log \dfrac{3 \cdot WOB}{14 \cdot BS}} \right]$$

wherein the mud logging data Rate of Penetration (ROP), Bit Size (BS), Revolution per Minute (RPM), and Weight on Bit (WOB) used to solve the Eq. 1 are obtained while drilling;

Normalization of C1 is the mathematical correction of the parameters that affect gas shows, such as ROP, FLOW and BS, and it is the only technique capable to analyze and correlate gas data from different drilling phase and different wells. Thus, according to another preferred embodiment of the method of the invention, the step of normalization the C1 data is calculated from the equation 2 (Eq. 2):

$$C1Norm = \frac{11.6 \cdot C1 \cdot FLOW}{ROP \cdot (BS)^2}$$

The equation 2 take into consideration only the surface drilling parameters obtained while drilling.

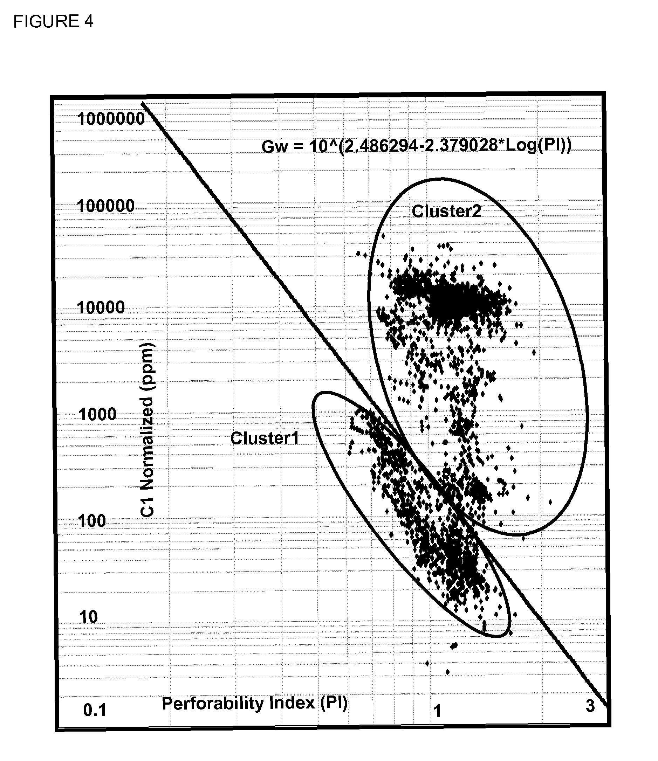

Step III of the method consists of plotting the C1 normalized versus PI in a double logarithmic plot (log log cross plot) (see Figure 4). The plot is named BT (Beda & Tiwary) and consists of a double logarithmic plot of a C1 (in ppm) on the Y axis versus a Perforability Index on the X axis. The plot is used to derive the Gw baseline representing the 100% Sw. On this plot (see Figure 4) two cluster of points are seen. The cluster 1 (cluster1- Figure 4) having lower value of C1 is for the water bearing and shaly formation while the cluster 2 (cluster2 - Figure 4) on top of the plot having higher value of C1 is for the formation having hydrocabon with different saturation value.The Gw line is traced as a linear line passing through the uppermost part of the cluster 1. The Gw line represent a schematic division of the above plot in two parts. The points below the Gw line are considered as 100% saturated with water. But the points above the Gw line are having water saturation less than 100% depending upon their position away from GW line, meaning having hydrocarbon saturation.

Thus, in another preferred embodiment of the method of the invention, the Gw baseline is a linear line passing throught the topmost data points of shale and water zone on the double logarithmic plot of the C1 normalized data versus Perforability Index (PI).

The water/shaly zone are defined by the Gw baseline. Points below the Gw line will have 100% Sw while points above the baseline should have lower Sw. The baseline must be traced on the uppermost points cloud below the spread points in the upper part of the plot. The slope of the baseline is driven by the points on the right of the plot with high PI and low normalized C1 values. All the points above this line (high C1 values) will have a Sw less then 100%.

In another preferred embodiment of the method of the invention, the determination of the water saturation (Sw_Gas) using the,Gw baseline step comprises solving the equation 3 (Eq. 3)

$$Sw\_Gas = \sqrt{\frac{Gw}{Gh}}$$

wherein Gh, is the normalised value of C1 (ppm) at each depth point of the borehole. On Gw line the value of Gw is equal to Gh.

Ignoring all the variables inherent to different drilling conditions, the mud logging data recorded at surface are essentially dependent on the lithology and porosity. While drilling, the lithology is known by cuttings, GR/MWD or by reference wells, and the main unknown variable remains the porosity. This approximation, without significant variations in the reservoir properties, allows predicting the magnitude of the porosity.

Regarding to porosity, the objective is to have a porosity profile, in real time, which is comparable in terms of trend and magnitude to the porosity derived by E-logs, for better understanding of the reservoir property, anticipation of net pay and streamlining the logging and testing acquisition.

According to an embodiment of the method of the present invention to determining the porosity of an underground formation while drilling a borehole, can be applied both when a calibration or reference well is available (i.e. when a full set of E-logs is avilable) and whitout any calibration log.

In a preferred embodiment, when a reference well is available, the porosity (PHI_Log) is calculated by derivation of the relationship between porosity ($\varphi$, "PHI") and Perforability Index (PI) plotting in linear scale the PI (on the X axis) versus Total Porosity (on the Y axis) obtained from E-log data in the calibration well.

In a more preferred embodiment, the calculation of the PHI_Log is obtained using the RMA line and the RMA regression formula derived by plotting, the PI versus the Total Porosity obtained from Density/Neutron Log (PHINDX) on a linear scale of the reference well.

The of PHI_Log is calculated using the RMA regression formula derived by the plot defined above

Generally, the porosity in the reservoir shows several and large changes which are difficult to be estimated by this methodology. Although no precise prediction of the porosity is obtained, the average estimation must be considered good. The trend and magnitude of the predicted porosity are in line (standard error +/- 10%) with the log derived porosity.

In case of lack of reference wells or models, the porosity (PHI_ML) can be calculated using the linear plot of PI versus depth to define a PI baseline ($PI_{0line}$) in shale or zone with 0% porosity and derive the PHI_ML solving the equation 4 (Eq. 4)

$$PHI\_ML = \left\{ \left\{ \frac{PI - PI_{0line}}{PI_{0line}} \right\} + K \right\} M$$

wherein

PI = Perforability Index

$PI_{0line}$ = PI baseline in shale or zone with 0% porosity

K and M are calculated by correlating the PI with the log derived porosity, could vary with the lithology and basin and $0.2 < K < 1$, and $0.05 < M < 0.5$

Further, although the embodiments of the invention comprise processes performed in computer apparatus, the invention also extends to computer apparatus and to computer programs, particularly computer programs on or in a carrier, adapted for putting the invention into practice.

Accordingly, it also forms part of the invention a computer program product comprising program instructions for causing a computer to perform the method of determining the porosity (PHI) and water saturation (Sw) of an underground formation while drilling a borehole as defined above

The program may be in the form of source code, object code, a code intermediate source and object code such as in partially compiled form, or in any other form suitable for use in the implementation of the processes according to the invention.

In a preferred embodiment, the computer program product is embodied on a storage medium.

In another preferred embodiment, the computer program product is carried on a carrier signal. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means. When the program is embodied in a signal that may be conveyed directly by a cable or other device or means, the carrier may be constituted by such cable or other device or means. Alternatively, the carrier may be an integrated circuit in which the program is embedded, the integrated circuit being adapted for performing, or for use in the performance of, the relevant process.

The methodology of the present invention works while drilling exploratory wells, and it is more effective and reliable for appraisal/development wells.

The measurement of porosity and water saturation obtained while drilling by the method described above allows to infer the volume of hydrocarbon, i.e. the total volumen of oil and/or gas contained in a given reservoir, and reducing the uncertaininity inherent to petrophysical interpretation of E-logs.

It is well known in the art that the total amount of hydrocarbon in the reservoir is calculated from the equation 5 (Eq. 5)

$$T = (1 - Sw)PHI \cdot Vt$$

wherein T is the Total amount of hydrocarbon, Sw and PHI are the water saturation and porosity taken over the entire reservoir, and Vt is the total volume of the reservoir. This evaluation is in fact usually done layer by layer, i.e. by adding the hydrocarbon volumes corresponding to various zones in the reservoir.

One application is in wells where:

a) the conventional E-log formation evaluation is not conclusive,
b) in difficult logging acquisition (high temperature, horizontal well),
c) lack of E-log,
d) in mature fields where Sw and porosity are well know and well calibrated (no more heavy and or costly acquisition required).

The innovative methodologies of the present invention permit an early evaluation of the potential hydrocarbon intervals and estimation of Sw and total porosity. Thus, this method will allow preliminary well-site reservoir evaluation.

The described methodology involving the equations and plots herein described is able to predict the water saturation using gas and mud logging data with similar values as those obtained by petrophysical analysis of wire line log data.

The techniques of the present invention are applicable to both exploratory and development wells.

The real time water saturation (Sw_Gas) and porosity (PHI_ML) estimation method of the present invention will help in resolving the ambiguity of the petrophysical interpretation in situation of low resistivity, low contrast formation and in shaly sequence. Thus, it is a useful tool in selecting appropriate logging suite.

The methodology is a reliable and effective tool for a formation evaluation at no cost. The trends and magnitude of the main derived parameters derived are in line +/- 10%, with E-logs results.

Throughout the description and claims the word "comprise" and variations of the word, are not intended to exclude other technical features, additives, components, or steps. Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

Although the present invention has been described in detail for purpose of illustration, it is understood that such detail is solely for that purpose, and variations can be made therein by those skilled in the art without departing from the scope of the invention.

Thus, while the preferred embodiments of the methods and of the systems have been described in reference to the environment in which they were developed, they are merely illustrative of the principles of the invention. Other embodiments and configurations may be devised without departing from the scope of the appended claims.

EXAMPLES

The case study presented herein correspond to well located in offshore, shallow water environment. The sedimentology sequence consists of Upper Cretaceous carbonate deposits. The well used in this study was drilled with synthetic oil base mud, in a hydrostatic pressure regime and in a Shaly-Sand sequence. All the inventions which have been mentioned in this document have been applied in realtime during the drilling operation using Mud log and gas data and porosity (PHI_ML) and water saturation (SW_GAS) were calculated. These results were matched by the water saturation and porosity calculated by petrophysical analysis of the wireline logs recorded after end of the drilling operation. PHI_LOG was calculated by calibrating PI with porosity (PHNDX) derived by petrophysical analysis of wireline log .The calibration was done drawing the RMA line and finding the equation between PI and porosity derived by petrophysical analysis of wireline log. Once the equation is known then porosity can be predicted using PI in realtime drilling (as PI is availbale during realtime drilling operation).

The results of the invention were validated by the wireline log analysis. The process and the workflow for applying the invention is documented below.

General data of the well

Carbonate sequence
Synthetic Oil Based mud
12 1/4" drilling phase
Sampling frequency 0.5m

The first step of the process is the validation of the data sets by performing a severe quality control using the well known GWD approach and the QC methodology performed by the Service Co. In addition useful plots must be prepared in advance to prove the repeatability and reliability of the data.

The following plots were used for this purpose:

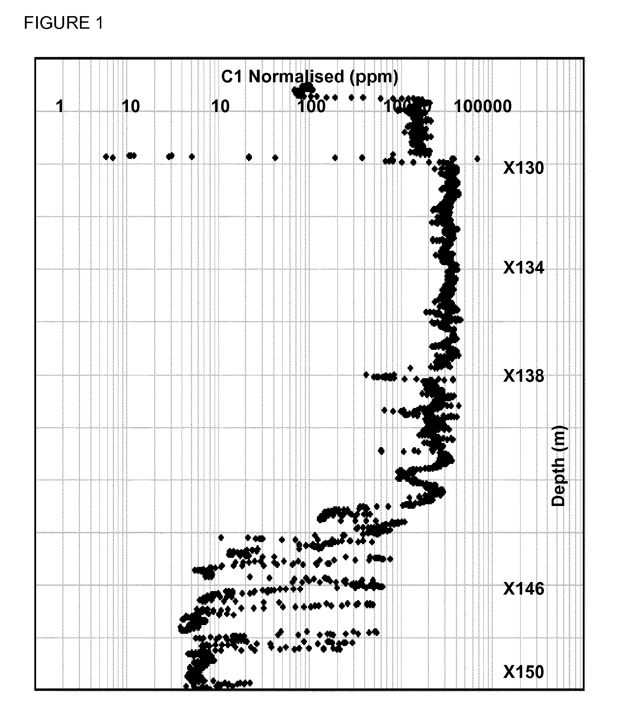

C1 Normalized versus Depth (Figure 1).

This plot shows the evolution of Methane (C1) with depth. This plot gives an excellent image of how C1 changes with depth (i.e. for correlation purposes).

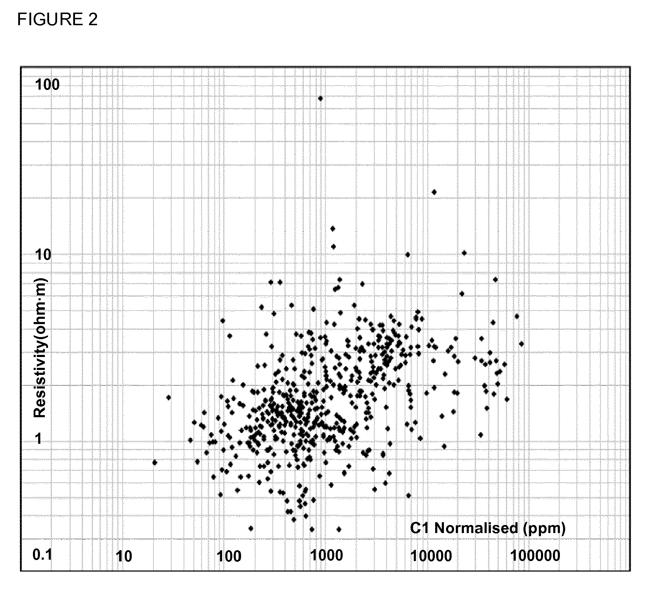

C1 Normalized versus Resistivity (Figure 2).

The plot shows the good match between Methane (C1) versus Resistivity.. The good relationship between resistivity and C1 confirms that the use of C1 to replace the resistivity curve for the formation evaluation by gas permits the prediction of the main reservoir parameters (Sw and PHI).

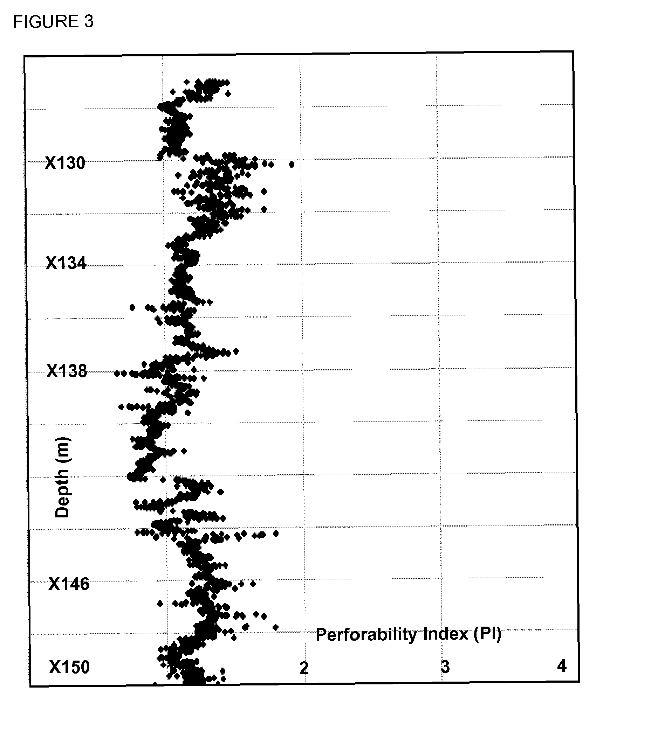

PI versus Depth (Figure 3).

PI (Perforability Index) is the inverse of the ROP normalized. This parameter is directly related to porosity/lithology changes.

The well has encountered a thick section of hydrocarbon bearing formation. The presence of hydrocarbon is proved by retrieving the hydrocarbon sample from various depth of the well in WLFT and has produced hydrocarbon on well testing. (Figure 1).

Gas data (Methane, C1) and ROP were normalized in order to calculate the C1 normalized and the Perforability Index (PI). Using the above two curves, the plot of the C1 normalized data versus PI in a double logarithmic plot (log log cross plot) (Figure 4) was constructed. The plot was used to derive the Gw baseline representing the 100% Sw. On this plot (see Figure 4) two cluster of points are seen. The cluster 1 (cluster1 - Figure 4) having lower value of C1 is for the water bearing and shaly formation while the cluster 2 (cluster2 - Figure 4) on top of the plot having higher value of C1 is for the formation having hydrocabon with different saturation value.The Gw line was traced as a linear line passing through the uppermost part of the cluster 1. The GW line represent a schematic division of the above plot in two parts.

The points below the GW line are considered as 100% saturated with water. But the points above the GW line are having water saturation less than 100% depending upon their position away from GW line, meaning having hydrocarbon saturation. The equation of this Gw baseline is:

$$\text{Gw line} = 10^{\wedge}(2.486294 - 2.379028 * \text{Log}(PI)).$$

The points below the Gw line as shown in Figure 4 (BT plot) are the gas measurements related to C1 value from shale and water bearing reservoirs, while the the points above the Gw line, having high values of C1, are related to the hydrocarbon zones.

Once the baseline was set and traced, the further step is to simply apply the equation 3 (BT equation) to calculate the Sw_Gas.

The second reservoir parameter derived by the invention is Porosity.

A first porosity curve, called PHI_ML, is derived without the use of a calibration well by applying the equation 4 (Eq. 4).

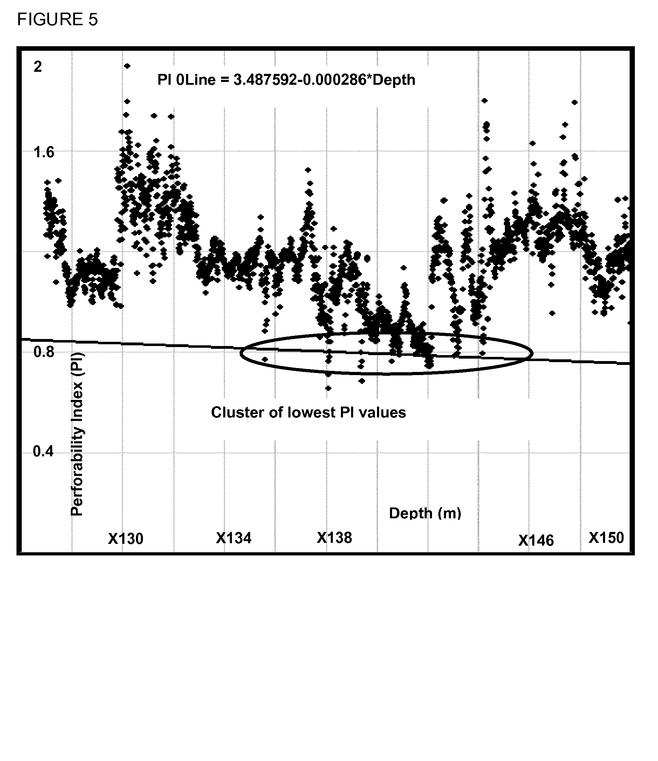

The vital parameter for the equation 4 is $PI_{0line}$ which is obtained by using the crossplot of Depth on X axis and PI on Y axis, both on linear scale (see Figure 5). The base line $PI_{0line}$ is traced by passing a linear line through the cluster of points having lowest values of PI on the PI versus depth plot The equation for this line, $PI_{0line}$ for the well discussed in this example is as follows.

$$PI_{0line} = 3.487592 - 0.000286 * \text{Depth} \quad (\text{shown in Figure 5})$$

Using the above line PHI_ML is obtained for each incremental depth by Eq. 4.

The K and M values used for the equation 4 is as below:

K= 0.5 and M = 0.2

Another method for obtaining porosity curve is to use a well log data for calibration. This method can only be used when well log porosity curves are present in the well. Once the PHI_LOG is derived by calibration then it can be used in realtime with the same calibration coefficient for the futures wells in the basin.

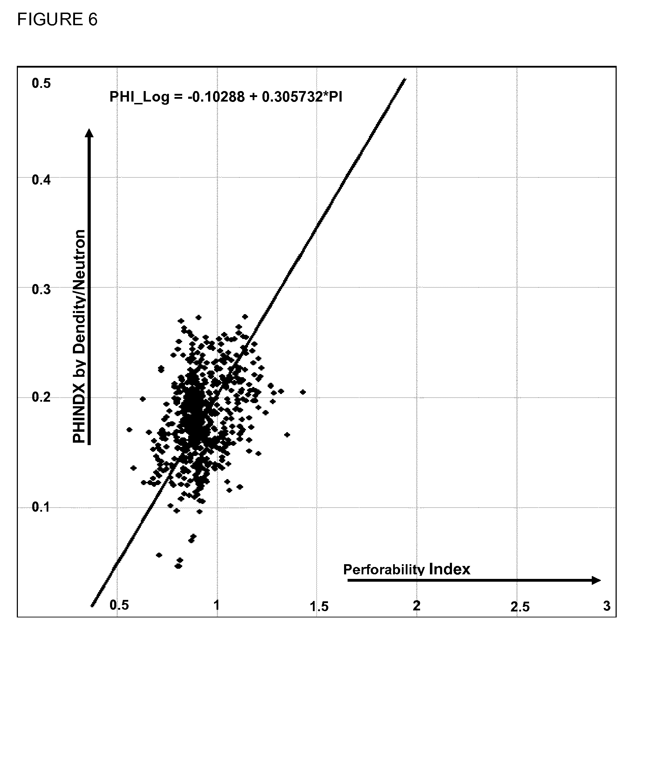

The plot in Figure 6, is a crossplot of PI on X axis and porosity by Density/Neutron on Y axis, both in linear scale. The plot shows the relation between the PI and the porosity by Density/Neutron (recorded by wireline log at the end of drilling phase). The RMA regression line is drawn between the two vairable as shown in the Figure 6

$$\text{PHI\_(Neutron Density)} = -0.10288 + 0.305732 * (PI)$$

Once the relationship is established the equation is transformed as

$$\text{PHI\_LOG} = -0.10288 + 0.305732 * (PI)$$

Using the equation above which include PI, calculated from the described methodolgy, the PHI_LOG can be obtained for any well lying in the same basin.

Comparison of derived result using the methodology of the invention with the petrophysical analysis of wireline log

Fig: 7. shows the comparison between the derived parameters (Sw_Gas, PHI_ML & PHI_LOG) by the methodology of the invention in realtime and the same parameters derived by the petrophysical analysis of the wireline log recorded at the end of the drilling phase. In the first track, Sw_Gas and Sw_Elog are plotted together. The two curves follow each other in trend and magnitude. The small difference between the two values are within the tolerance limit of +-10%. Similarly, the track 2 shows the curves PHI_LOG and PHINDX (Porosity derived by Density/Neutron log). The two curves again follow each other in trend and magnitude. The track 3 shows the curves PHI_ML plotted along with PHINDX. The PHI_ML is able to replicate the behaviour of PHINDX both in trend and magnitude.The PHI_ML, being derived without any calibration well may not have good correlation with the PHINDX, but it gives the approximate porosity profile close to the PHINDX, which is essential parameter for assesing the reservoir quality during drilling operation.

**Claims**

1. A method of determining the porosity (PHI) and water saturation (Sw) of an underground formation while drilling a borehole, which comprises:

    I. calculating the Perforability Index (PI) as the inverse of the Rate of Penetration (ROP) normalized which is solved as the mathematical correction of the mud logging parameters obtained while drilling that affect the Rate of Penetration (ROP);
    II. normalizing the methane (C1) data as a mathematical correction for variation in drilling parameters
    III. plotting the methane (C1) normalized data versus Perforability Index (PI) in a double logarithmic plot; and the Perforability Index (PI) versus depth in linear scale;
    IV. using the plots above to determine

        i. the Gw baseline representing the 100% Sw;
        ii. the $PI_{0line}$ representing the line in shale or zone with 0% porosity;

    V. determining the Sw_Gas from the determined Gw baseline obtained in step IV and determining the porosity using E-log data of a reference well (PHI_LOG) or from the determined $PI_{0line}$ obtained in step IV when no reference well is available (PHI_ML).

2. The method according to claim 1, wherein in step I the Perforability Index (PI) is calculated from the equation 1

$$PI = 1/\left[\frac{Log\dfrac{ROP}{RPM}}{Log\dfrac{3 \cdot WOB}{14 \cdot BS}}\right]$$

    wherein ROP is the Rate of Penetration, RPM is the Revolutions per Minute, WOB is the Weight on Bit, BS is the Bit Size; and the mud logging data are obtained while drilling.

3. The method according to any of the claims 1-2, wherein in step II the normalization of the C1 data is calculated from the equation 2

$$C1Norm = \frac{11.6 \cdot C1 \cdot FLOW}{ROP \cdot (BS)^2}$$

    wherein C1 is methane, FLOW is the Flow in, ROP is the Rate of Penetration and BS is the Bit Size; and the gas and mud logging data are obtained while drilling.

4. The method according to any of the claims 1-3, wherein the Gw baseline is a linear line passing throught the topmost data points of shale and water zone on the double logarithmic plot of the C1 normalized data vs Perforability Index (PI).

5. The method according to any of the claims 1-4, wherein the determination of the water saturation (Sw) using the Gw baseline step is calculated from the equation 3

$$Sw\_Gas = \sqrt{\dfrac{Gw}{Gh}}$$

wherein Gh, are the C1 normalized values for each depth points of the borehole

6. The method according to any of the claims 1-5, wherein the determination of the porosity is carried out using E-log data of a reference well (PHI_LOG) or without any reference well data (PHI_ML).

7. The method according to claim 6, wherein the determination of the porosity (PHI_LOG) is carried out using E-log data of a reference well by derivation of the correlation between PHI and PI plotting in linear scale the PI versus total porosity obtained from E-log data in a calibration well.

8. The method according to any of the claims 6-7, wherein the estimation of the PHI_LOG is obtained using the Reduced Major Axis (RMA) regression formula derived by plotting, in linear scale the PI versus the Total Porosity obtained from Density/Neutron Log data (PHINDX) of the reference well.

9. The method according to claim 6, wherein the determination of the porosity (PHI_ML) is carried out without any reference well data, and is calculated by plotting, in a linear scale, the PI versus the depth to define a PI baseline in shale or zone with 0% porosity ($PI_{0line}$); and deriving the PHI_ML from the equation 4

$$PHI\_ML = \left\{ \left\{ \frac{PI - PI_{0line}}{PI_{0line}} \right\} + K \right\} M$$

wherein

PI = Perforability Index;
$PI_{0line}$ = PI baseline in shale or zone with 0% porosity; and
$0.2 < K < 1$, and $0.05 < M < 0.5$

10. A computer program product comprising program instructions for causing a computer to perform the method as defined in any of claims 1 to 9.

11. The computer program product according to claim 10, embodied on a storage medium.

12. The computer program product according to claim 10, carried on a carrier signal.

13. A system of determining the porosity (PHI) and water saturation (Sw) of an underground formation while drilling a borehole, the system **characterized in that** comprises computing means for calculating the Perforability Index (PI) as the inverse of the Rate of Penetration (ROP) normalized which is solved as the mathematical correction of the mud logging parameters obtained while drilling that affect the Rate of Penetration (ROP), using the mud logging data Rate of Penetration (ROP), Revolution per Minute (RPM), and Weight on Bit (WOB) obtained while drilling; computing means for normalizing the C1 data as the mathematical correction of the mud logging parameters that affect gas shows; computing means for plotting the C1 normalized data versus Perforability Index (PI) in a log log cross plot; and the PI versus depth in linear scale; computing means for using the plots above to determine the Gw baseline representing the 100% Sw and the PI baseline in shale or zone with 0% porosity; and computing means for determining the porosity and water saturation using the Gw baseline or the Perforability Index baseline ($PI_{0line}$) obtained above.

14. A system of determining the porosity (PHI) and water saturation (Sw) of an underground formation while drilling a borehole, the system comprising a memory and a processor, embodying instructions stored in the memory and executable by the processor, the instructions comprising functionality to:

I. calculating the perforability index (PI) as the inverse of the Rate of Penetration (ROP) normalized which is solved as the mathematical correction of the mud logging parameters obtained while drilling that affect the ROP;
II. normalizing the methane (C1) data as the mathematical correction for variation in drilling parameters;
III. plotting the methane (C1) normalized data versus Perforability Index (PI) in a double logarithmic plot; and the Perforability Index (PI) versus depth in linear scale;
IV. using the plots above to determine

    i. the Gw baseline representing the 100% Sw;
    ii. the $PI_{0line}$ representing the line in shale or zone with 0% porosity;

V. determining the Sw_Gas from the determinied Gw baseline obtained in step IV and determining the porosity using Elog data of a reference well (PHI_LOG) or from the determined $PI_{0line}$ obtained in step IV when no reference well is available (PHI_ML).

15. Method for identifying and evaluating an underground formation of interest while drilling a borehole which comprises:

a) determining the porosity and water saturation obtained while drilling a borehole according to any of the claims 1-9;
b) determining the total amount of hydrocarbon in the reservoir from the equation 5

$$T = (1 - Sw)PHI \cdot Vt$$

wherein T is the Total amount of hydrocarbon, Sw and PHI are the water saturation and porosity taken over the entire reservoir, and Vt is the total volume of the reservoir.

FIGURE 1

FIGURE 2

FIGURE 3

FIGURE 4

FIGURE 5

Plot showing Perforability Index (PI) versus Depth (m). The equation PI 0Line = 3.487592-0.000286*Depth is shown, with a marked ellipse labeled "Cluster of lowest PI values."

FIGURE 6

FIGURE 7

## INTERNATIONAL SEARCH REPORT

| | International application No |
|---|---|
| | PCT/ES2011/070734 |

**A. CLASSIFICATION OF SUBJECT MATTER**

INV. G01V1/50
ADD.

According to International Patent Classification (IPC) or to both national classification and IPC

**B. FIELDS SEARCHED**

Minimum documentation searched (classification system followed by classification symbols)

G01V

Documentation searched other than minimum documentation to the extent that such documents are included in the fields searched

Electronic data base consulted during the international search (name of data base and, where practical, search terms used)

EPO-Internal, INSPEC, COMPENDEX

**C. DOCUMENTS CONSIDERED TO BE RELEVANT**

| Category* | Citation of document, with indication, where appropriate, of the relevant passages | Relevant to claim No. |
|---|---|---|
| A | US 2010/283459 A1 (KRUSPE THOMAS [DE] ET AL) 11 November 2010 (2010-11-11) paragraph [0050]; claim 1 ----- | 1-11, 13-15 |
| A | US 4 961 343 A (BOONE DANIEL E [US]) 9 October 1990 (1990-10-09) claims 1,2 ----- | 1,13,14 |
| A | US 4 949 575 A (RASMUS JOHN C [US]) 21 August 1990 (1990-08-21) column 2, line 55 - column 3, line 28 column 7, line 3 - line 29 ----- -/-- | 1,13,14 |

[X] Further documents are listed in the continuation of Box C.     [X] See patent family annex.

* Special categories of cited documents :

"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 March 2012 | 18/04/2012 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Lorne, Benoît |

Form PCT/ISA/210 (second sheet) (April 2005)

## INTERNATIONAL SEARCH REPORT

| International application No |
| --- |
| PCT/ES2011/070734 |

**C(Continuation).    DOCUMENTS CONSIDERED TO BE RELEVANT**

| Category* | Citation of document, with indication, where appropriate, of the relevant passages | Relevant to claim No. |
| --- | --- | --- |
| A | BRUCE Z. SHANG ET AL.:  "Inproved water saturation estimation using equivalen rock element model and application to different rock types", SOCIETY OF PETROLEUM ENGINEERS, 9 June 2008 (2008-06-09), - 12 June 2008 (2008-06-12), pages 1-9, XP002671606, the whole document ----- | 1,13,14 |
| A | D.KANDEL ET AL.:  "Improved integrated reservoir interpretation using the gas while drillling (GWD) data", SOCIETY OF PETROLEUM ENGINEERS INC., 24 October 2000 (2000-10-24), - 25 October 2000 (2000-10-25), pages 1-17, XP002671607, page 1 - page 4 ----- | 1,13,14 |

Form PCT/ISA/210 (continuation of second sheet) (April 2005)

## INTERNATIONAL SEARCH REPORT
Information on patent family members

International application No

PCT/ES2011/070734

| Patent document cited in search report | | Publication date | Patent family member(s) | | Publication date |
|---|---|---|---|---|---|
| US 2010283459 | A1 | 11-11-2010 | US | 2010283459 A1 | 11-11-2010 |
| | | | US | 2010283460 A1 | 11-11-2010 |
| | | | US | 2010283461 A1 | 11-11-2010 |
| US 4961343 | A | 09-10-1990 | NONE | | |
| US 4949575 | A | 21-08-1990 | NONE | | |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARCHIE, G.E.** Electrical resistivity Log as an Aid in Determining Some Reservoir Characteristic. *AIME,* 1942, vol. 146, 54-61